Europäisches Patentamt

(19) European Patent Office

Office européen des brevets

(11) Publication number: **0 139 929**
**B1**

# EUROPEAN PATENT SPECIFICATION

(45) Date of publication of patent specification: 06.07.88

(51) Int. Cl.⁴: **G 01 N 30/36,** G 01 N 30/74

(21) Application number: **84109416.2**

(22) Date of filing: **08.08.84**

(54) Method and apparatus for reducing schlieren noise in a liquid chromatograph.

(30) Priority: **31.08.83 US 537954**

(43) Date of publication of application:
**08.05.85 Bulletin 85/19**

(45) Publication of the grant of the patent:
**06.07.88 Bulletin 88/27**

(84) Designated Contracting States:
**DE FR GB**

(56) References cited:
**US-A-3 522 725**
**US-A-4 019 372**
**US-A-4 131 427**

(73) Proprietor: **ISCO, Inc.**
**4700 Superior Street**
**Lincoln Nebraska 68504 (US)**

(72) Inventor: **Allington, Robert William**
**P.O. Box 5347**
**Lincoln Nebraska 68505 (US)**

(74) Representative: **UEXKÜLL & STOLBERG**
**Patentanwälte**
**Beselerstrasse 4**
**D-2000 Hamburg 52 (DE)**

## Description

This invention relates to methods and apparatus for reducing Schlieren noise in a liquid chromatograph.

It is known to reduce Schlieren noise in a liquid chromatograph by reducing the temperature differences between the eluate and the flow cell. This reduces the difference in density and hence differences in refraction index between portions of the eluate in the flow cell. Since the eluate is in motion, such differences deflect light in an unpredictable manner, thus producing photometric noise.

A prior art technique disclosed in United States patent 3,522,725 attempts to maintain a temperature equality between the flow cell and the eluate entering the flow cell by pumping the eluant through a massive metal heat exchanger and the eluate through the same heat exchanger before it reaches the flow cell.

The prior art techniques have several disadvantages, such as: (1) a substantial amount of Schlieren noise remains; (2) the heat changer causes heat to be conducted to or from the flow cell and therefore sets up temperature gradients within the flow cell with respect to the flow of eluate; (3) the techniques are slow to stabilize and require much time before measurements can be made without excessive Schlieren noise; and (4) the volume of the path through the heat exchanger degrades the degree of separation of narrow chromatographic peaks or bands in the eluate.

The disadvantage caused by the fluid volume of path of the eluate through the heat exchanger is a particular problem with micro-liquid chromatography. A common column diameter for micro-liquid chromatography (MLC) is one millimeter and a common conventional high performance liquid chromatography (HPLC) column diameter is 4.6 millimeters. Thus, the cross sectional area of a MLC column is about one-twentieth (1/20) that of an HPLC column, and so MLC solute peaks are smaller in volume by at least a factor of 20. It is more than a factor of 20 if the length of a peak residing in the column also decreases when going from HPLC to MLC.

Because the solute peaks are smaller in MLC, the peak resolution degradation problems are aggravated because of the difficulty of detecting and collecting low volume bands. This problem is further aggravated when micro-capillary MLC columns with a diameter of 0.1 millimeter or less are used.

The smaller peak volumes of MLC require proportionately smaller fluid volumes in the optical path in order to maintain the same chromatographic resolution. Since shortening the optical path length decreases the absorbance sensitivity according to Beer's Law, the diameter of the path length must be made smaller instead. The greater length to diameter ratio of MLC cells increases their Schlieren noise over that of comparable HPLC cells, thus making it even more of a problem with MLC than with HPLC. The conventional HPLC noise reduction methods are undesirable for MLC because they degrade volumetric resolution which is much more critical for MLC than for HPLC.

Accordingly it is an object of this invention to provide a novel liquid chromatograph which reduces Schlieren noise by reducing the temperature in the vicinity of the flow cell.

In accordance with the claimed invention, an apparatus for reducing noise in a liquid chromatograph comprises an absorbance detector and a chromatographic column and a flow cell mounted within an optical enclosure and characterized by an air enclosure and an air duct that communicates with the air enclosure at a first end; the air duct and air enclosure having a second end adapted to be mounted to the absorbance detector. There is within the air enclosure an adjustable arm and support column for supporting the chromatographic column at least partly within the absorbance detector. A means for causing air to flow from the absorbance detector through the air duct, air chamber and back to the absorbance detector is provided and the flow cell and column are mounted so that at least a portion of the column is within the air enclosure and a portion of the flow cell and chromatographic column are within the absorbance detector, whereby air flows from the air duct to the chamber and through the chamber against the chromatographic column in the direction fluid flows through the chromatographic column to the flow cell.

Advantageously, the apparatus for reducing the noise in a liquid chromatograph further includes an injection valve mounted to the chromatographic column characterized by both valve and column being within air chamber.

The apparatus additionally includes a light generating apparatus which generates light with a wave length of between 180 nanometers and 3,000 nanometers and transmits the light through the flow cell; characterized by the light varying in intensity by less than ten percent in one minute.

It is an advantage that the apparatus is further characterized by an air flow control section for measuring and adjusting the rate at which the air moves and for measuring the temperature in the air chamber.

Advantageously, the air flow control section increases said rate automatically when the temperature drops with respect to temperature at a point outside the air chamber and decreases the rate when the temperature increases with respect to temperature at a point outside the chamber. A direct connection between the chromatographic column and the flow cell permits direct communication therebetween, and an arm and support column mount the chromatographic column with the arm and support column being formed of a highly heat-conductive, heat-retaining metal.

One method of operating the novel chromatograph comprises the steps of applying electrical power to an absorbance detector within an enclosure containing at least the flow cell and a portion of the chromatographic column; characterized by causing air to flow from the enclosure into an air chamber that encloses a sample injection valve and at least a part of a chromatographic column and recirculating the air from a location near the sample injection valve along the column toward the flow cell until temperature changes with respect to time at each location are within less than 0.1 degree Celsius within the enclosure and chamber within a one minute time period; passing eluant after the temperature has stabilized through the column and flow cell; transmitting a beam of light having a wave length within a range of wave lengths of 180 nanometers to 3,000 nanometers through the flow cell from a source of light that varies less than ten percent in intensity in a one minute period; and detecting changes in the absorbance of light through said flow cell.

Advantageously, the method causes air to flow from the compartment to the inlet of the chromatographic column and back to the compartment and is characterized by a rate of flow at start up in the range of 1 to 100 volumes of air per minute for each volume of capacity of the chamber.

The method of operating the liquid chromatograph is further characterized by the steps of causing air to flow along a chromatographic column from an electro-optical compartment and back to the compartment in the same direction the eluant flows in the column; and after temperature has stabilized with respect to time in the compartment, performing chromatographic runs.

The step of causing air to flow includes the step of causing air to flow from the compartment into an air chamber having at least a part of a chromatographic column within it and recirculating the air from a point on the column spaced away from its end closer to the flow cell into juxtaposition with the flow cell until the temperature has stabilized within the air chamber; and transmitting eluant through the column and flow cell after the temperature has stabilized.

Advantageously, the step of causing the air to flow includes the step of causing air to flow from the compartment into an air chamber and recirculating the air until the temperature changes with respect to time at each location are within less than 0.1 degree Celsius per minute within the air chamber.

The above noted and other features of the invention will be better understood from the following detailed description when considered in connection with the accompanying drawings, which are:

Figure 1 is a fragmentary simplified perspective view in accordance with an embodiment of the invention;

Figure 2 is a schematic showing of a portion of the embodiment of Figure 1; and

Figure 3 is a partly broken-away, perspective view of the embodiment of the invention of Figure 1 from another angle.

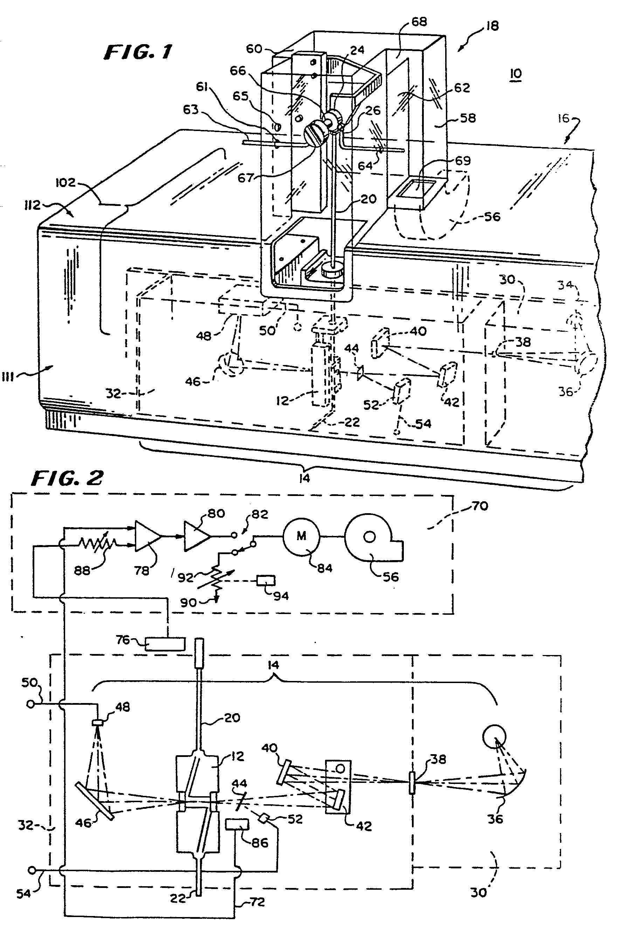

In Figure 1, there is shown a simplified perspective view of an apparatus 10 for reducing Schlieren noise in a liquid chromatograph having a flow cell assembly 12, a light path assembly 14, an electro-optical section 16 and an air flow control section 18. The light path assembly 14 generates and transmits light through the flow cell assembly 12 within the electro-optical section 16 while the air flow control section 18 controls the flow of air outside of the electro-optical section 16 to reduce Schlieren noise. Air flow is also controlled by outer wall 111 and upper wall 112 of cabinet 102 surrounding the apparatus below the level of the air chamber 60.

This apparatus 10 has particular application in a micro-liquid chromatograph. Micro-liquid chromatography is a form of high performance liquid chromatography that differs from conventional high performance liquid chromatography in that the inside diameter of the column is substantially less than the usual four to five millimeters.

The flow cell assembly 12 is connected at its top end to a liquid chromatographic column 20 and at its bottom end to an eluate outlet 22. At the upper end of the column 20 is: (1) a sample injection valve 24 for applying samples to the chromatograph for analysis; and (2) a high pressure eluant inlet 26 from a source of eluant which is generally at ambient temperature. The chromatograph itself may be of any type but the preferred embodiment is directed to a micro-scale, high performance liquid chromatograph such as that described in United States patent 4,536,091 entitled Absorbance Monitor.

The light path assembly 14 includes a deuterium lamp assembly 30 and an optical enclosure or compartment 32 mounted side-by-side so that light from the deuterium lamp assembly 30 is transmitted to the optical compartment 32 where it is caused to flow through the flow cell assembly 12 within the optical compartment 32. The deuterium lamp assembly 30 includes a deuterium lamp 34 and an aspheric condensing mirror 36 which focuses light through a small slit at 38 into the optical compartment 32.

The optical compartment 32 is sealed so that air from the air flow control section 18 contacts it on its outer compartment surface but does not flow through the optical path. It includes an aspheric monochrometer focusing mirror 40, a diffraction grating assembly 42 and a beam splitter 44. The aspheric monochrometer focusing mirror 40 is positioned to receive light from the deuterium lamp assembly 30 after it has passed through the slit at 38 and focuses the light upon the diffraction grating assembly 42.

The diffraction grating assembly focuses selected frequencies of light on the beam splitter 44. A portion of the light passing through the beam splitter 44 is transmitted through the flow cell assembly 12 and reflected by the collecting mirror 46 onto a first detector 48 which generates a signal on conductor 50. A second portion of the light from the beam splitter 44 is focused on a second detector 52 resulting in a signal on conductor 54. These signals are used to provide information about the sample as described in the below mentioned patent application and as known in the art.

The electro-optical section 16 includes both the deuterium lamp assembly 30 and the optical compartment 32 as well as the electronic equipment necessary for a typical absorbance monitor resulting in output signals that provide information about the eluate flowing through the eluate outlet 22. The absorbance monitor in the preferred embodiment is similar to the one disclosed in United States patent 4,536,091 entitled Absorbance Monitor. However, the absorbance monitor has been modified to accommodate the chromatographic column and flow cell within the cabinet in the manner shown in Figure 1 in the preferred embodiment. The specific absorbance monitor is not part of this invention.

The air flow control section 18 includes a blower 56, an air duct 58 and an air chamber 60. The air duct 58 is generally a parallelopiped, being formed of a top and four side walls mounted over an outlet from the cabinet to the electro-optical section 16. The walls are 6.3 mm thick and it has a volume of approximately 283 cubic cm with the vertical sides being 3.2 cm by 2.9 mm and the entire air duct 58 being 30 cm in height. It is positioned against the air chamber 60 and shares a common top with it.

The air chamber 60 encloses the top of the chromatographic column 20, the sample valve 24 and the eluant inlet 26. A connecting wall 62 between the air duct 58 and the air chamber 60 is slightly shorter, forming an open space 68 for communication between the two of approximately 3.8 cm by 5 cm to permit air to flow from the air duct 58 to the air chamber 60. The volume of the air chamber is approximately 7075 cubic cm and its walls are approximately 6.3 mm thick.

To provide air to the air duct 58 and from there to the air chamber 60, the blower 56 is mounted within the electro-optical section 16 and communicates through the top thereof with the bottom of the air duct 58 through an opening 69. It flows approximately 283,000 cubic cm per minute through the air duct 58 into the air chamber 60. Air from the air chamber 60 flows downwardly over the top portion of the chromatographic column 20 and back into the electro-optical section 16 where it blows across the surface of the optical compartment 32 to remove heat therefrom.

To enable an operator to use the chromatographic column, the walls of the air duct 58 and air chamber 60 are of acrylic plastic and thus transparent. The walls of the air chamber 60 contains a first opening at 64 through which the eluant inlet 26 passes and a second opening 66 through which the sample valve 24 may be manipulated with knob 67. Sample is loaded into the sample valve by injection from a conventional hypodermic needle introduced through hole 65. Excess sample exits the valve through bent tube 63 which passes through hole 61.

In the preferred embodiment, the ratio of the volume between the air duct 58 and the air chamber 60 is approximately 1 to 25. The ratio of the air duct 58 to the air chamber 60 should be in a range less than a ratio of 1 to 1.5 and more than a ratio of 1 to 300 for efficient operation and the ratio of the air chamber 60 to the volume of the electro-optical section 16 which generates heat should be no greater than 1.5 to 1 and no less than 1 to 30.

The volumetric flow rate caused by the blower 56 should be sufficient to create enough static pressure to force air to circulate and reach equilibrium in a reasonable amount of time. More importantly, it is necessary that the equilibrium temperature distribution and thermal fluxes must meet specific criteria which will be described later, in order to accomplish the object of the invention. In the preferred embodiment the blower 56 exchanges about 283,000 cubic cm of air per minute and should have a capacity to change at least one-tenth of the volumetric amount of air in the air chamber 60 and air duct 58 each minute.

In operation, the electro-optical section 16 is operated until temperature equilibrium is reached while the blower 56 is operated. Temperature or heat equilibrium is a condition in which the temperature does not vary more than 0.1 degree Celsius at any location within a one minute period of time. In this condition air flows from the electro-optical section 16 through the air duct 58 into the air chamber 60 through an opening 68 downwardly to the bottom of the air chamber 60 and over the surface of the optical compartment 32 back into the electro-optical section 16 for recirculation.

In the preferred embodiment, it requires three hours from cold start or one hour from a standby warmup start to reach equilibrium but this is a function of the volume of air, the amount of localized heat released and the rate of amount of air. The air flower may be any suitable commercial unit such as one having a squirrel cage wheel inside a snail housing driven at approximately 2500 RPM by any suitable motor, which may be operated on 25 volts at about 60 milliampers from a low-voltage DC supply.

Air flow through the air control section 18 is approximately 283,000 CCM (cubic cm per minute), at 0.20 inch (5 mm) static pressure. Generally, the chromatograph is not operated until the temperature has stabilized and at this time there is a change in temperature of the air from the blower 56 to the top of the air duct 58 and as the air drops downwardly from the air chamber 60 to the optical compartment 32 it loses heat to establish an air temperature gradient along the flow path and becomes cooler as it follows that flow path.

The fluid in the flow path traveling along column 20 in the same direction as the heated air driven by fan 56 is pre-heated at the top of the flow path and rises in temperature as it flows along. However, at a distance of about 10 to 20 centimeters above the flow cell, the air has cooled to about the temperature of the fluid in the flow path because the air flow is constantly losing heat to the outside environment through the nearest walls of the air chamber. When the air cools sufficiently, it no longer heats the fluid in the flow path and the temperature of the fluid in the flow path does not change as it flows downwardly from this point.

As the fluid in the column 20 flows down to and inside the light path compartment 14, it starts to pick up heat by thermal conduction from the optical compartment 32 which in turn is being heated by thermal conduction from the electro-optical section 16. At the same time, the air flow continues down around the lower part of the column 20 and around the walls of the optical compartment 32. All this time, the flowing air is still losing heat to the outside environment first through the outer walls of the air chamber 18 and then through outer wall 111 and upper wall 112 of cabinet 102 surrounding the light path assembly 14. The air continues to cool and continues dropping through lower and lower temperatures which are colder than the lower part of the column 20 and the flow cell 12.

The air flow rate and sizes and spacings of the components are such that the thermal equilibrium temperatures of the flowing liquid in the lower part of the column 20 and in the flow cell 12 are equal. This is because at this particular temperature, along all or most of this part of the flow path, the heat lost to the air equals the heat gained by conduction from the electro-optical section 16. The positive and negative heat fluxes are higher near the flow cell 12 then at the lower 10 to 20 centimeters of the column 20 but in both places, the positive and negative heat fluxes external to the flow path are equal for the same temperature inside the flow path.

It is believed that this result can only be obtained using the form of co-current flow heat exchanger described. This is a surprising result as counter-current flow heat exchangers are universally believed to be more efficient than co-current heat exchangers. In fact, co-current heat exchangers are commonly believed to be the least efficient of all forms of heat exchangers.

When the temperature has stabilized, the chromatograph quickly may be operated so its samples are injected in the sample injection valve 24 while eluant flows through the inlet 26 and downwardly in the column 20 in the same direction as the air flow. As the mobile phase flows downwardly, it is heated to a temperature closer to that within the electro-optical section 16 and thus that of the optical compartment 32 and the flow cell 12.

Heat is transferred into the flow cell 12 by conductance from the electro-optical section 16 but a portion of this heat is absorbed by the air as it flows downwardly around the surface of the optical compartment 32 and back into the electro-optical section 16.

Because additional heat conducted to the optical compartment 32 from the electro-optical section 16 is differentially offset by the increased heat from hotter air flowing through the air duct 58 and the air chamber 60, the equipment is not sensitive to changes once it has stabilized. Thus an increase in heat conducted into the optical compartment 32 is accompanied by an increase in heat convected into the air chamber 60 and the two temperatures stay in balance.

The two temperatures stay in balance because the heat loss of the air through the air chamber walls from the air flowing downwardly through the air chamber maintains itself in the same proportionate increase as the heat lost from the area of the flow cell 12 in the optical unit 32 to the surrounding environment. This balance is maintained because more heat is removed from the area of the flow cell 12 to compensate for an increase in loss through the chamber walls from the air and this maintains stability. Conversely, changes in ambient temperature also have small effect in changing the differential temperature between the flow cell 12 and the column 20 when this differential is initially set to zero by use of the thermal system described herein because reductions in heat loss from the air flowing through the chamber are offset by reductions from the area of the flow cell 12.

Because of the automatic balancing of heat losses, the manual adjustment of the speed of the blower 56 is relatively easily made to obtain stability with a slight difference in temperature between the flow cell 12 and the fluid in the column 20 flowing through the flow cell 12. It is possible to maintain that difference to a value of less than one degree Celsius.

In Figure 2 there is shown a schematic diagram of the optical compartment 32, the deuterium lamp compartment 30 and a blower control system 70. In one embodiment, the blower control system 70 aids in stabilizing the temperature within the optical compartment to reduce Schlieren noise caused by temperature gradients from heat generated in the deuterium lamp compartments and electro-optical section.

To detect chromatographic peaks, the entrance aperture plate or slot 38 of the optical compartment 32 is positioned between the optical compartment 32 and the deuterium lamp compartment 30 so that light from the deuterium lamp 34 is condensed onto the aperture by the mirror 36 and passes from there into the optical compartment 32 which is next to it. Electrical signals from the optical compartment 32 are conducted outwardly from conductors 50, 54 and 72 with the signal from the conductors 50 and 54 being conducted to the absorbance detector disclosed in the aforementioned patent application and signals from the conductor 72 being conducted to the blower control system 70.

The optical compartment 32 is positioned in the path of air flowing downwardly from the air chamber 60 to be cooled thereby. Within this unit, a small amount of heat may be generated from a tungsten lamp (not shown) which may be used as an alternate source of light to the deuterium lamp 34.

The grating 42 is pivotable to select frequencies of light from either the tungsten lamp or the deuterium lamp 34. This selected frequency of light is transmitted to the beam splitter 44. The beam splitter 44 transmits light in one beam through the flow cell 12 and in another beam to the detector 52. The light flowing through the flow cell 12 is reflected from the collecting mirror 46 onto the detector 48 with the conductors 50 and 54 respectively conducting signals from the detectors 48 and 52.

The apparatus and method of reducing Schlieren noise: (1) produces and stabilizes a temperature gradient of downwardly decreasing temperatures in the air circulating through the system to reduce temperature variations in the column by opposing the downwardly-increasing fluid temperature gradient that would otherwise occur; (2) reduces temperature changes between the various portions of the eluant flowing from the column 20, through the upper part of the flow cell 12, and through the light path of the flow cell, due to an imbalance of net transverse thermal flux at any point along this entire part of the chromatographic flow path to reduce any Schlieren noise; and (3) reduces temperature changes in the air within the optical compartment to reduce extra-flow cell Schlieren noise caused by different density layers of air. The principal effect, however, is noise caused by the fluid flowing through the flow cell 12.

Generally, after the warming up of the light source, the light intensity variations sources in the short term are less low. The variation in light intensity after this warm-up period is less than ten percent within one minute. The absorbance measurements are made more accurately than this so, therefore, it usually requires recourse to a reference photocell or feedback stabilization of the light source in one of the ways known in the art. The frequencies of light which are selected for transmission fall within the range of 180 to 3,000 nanometers.

To adjust the rate of flow of air from the blower 56, the blower control system 70 includes a differential amplifier 78, a power amplifier 80, a switch 82 and the motor 84 for the blower 56. A first temperature measuring device 76 is preferably mounted on the chromatographic column above the flow cell and a second temperature measuring device 86 is mounted within the optical compartment 32, preferably on the flow cell 12 proximate to its light path and connected through conductor 72 to one input of the differential amplifier 78, the other input of which is electrically connected to the temperature measuring device 76, located outside the optical compartment 32 which is the temperature of the eluant in the column 20 (Figure 1).

With this arrangement, the signals from the temperature measuring devices 76 and 86 are compared in the differential amplifier 78. One input of the differential amplifier 78 is adjustable by a variable resistance 88 connected in circuit with one of the temperature measuring devices 76 and the differential amplifier 78. The temperature measuring device 76 is positioned at a location where it measures column temperature or ambient temperature such as being spaced by insulation or physically spaced from the electro-optical section 16.

To select manual adjustment of the air movement or automatic adjustment, the switch 82 is a single pole, double-throw switch having its switch arm electrically connected to the input of the blower motor 84. One of the contacts against which it may be thrown is connected to the output of the power amplifier 80, the input of which is electrically connected to the output of the differential amplifier 78.

When the switch 82 is connected to the output of the power amplifier, variations from a set point, controlled by the variable resistor 88, causes changes in the speed of the motor 84 and thus increasing stability in temperature. When the walls of the light path of the flow cell are at the same temperature as the eluate entering the flow cell, Schlieren noise is substantially reduced because there are little changes in the density of strata of liquid to cause changes in the refraction of light passing through the flow cell 12.

In the preferred embodiment, because of the ease of obtaining stability with the method and apparatus for reducing Schlieren noise in a liquid chromatograph, the speed of the blower 56 is only controlled manually and changed very infrequently. This may be accomplished in the illustrative embodiment of Figure 2 by throwing the switch 82 against a second contact connected to a source of potential 90 through a variable resistor 92. The resistance of the variable resistor 92 and thus the blower speed may be adjusted manually from outside of the cabinet through a control knob 94.

With this arrangement, the speed of the blower 56 may be adjusted from the control knob 94 while measuring temperature within the optical compartment 32 or the electro-optical section 16 (Figure 1) until temperature stability is obtained. By proper sizing of the blower and its motor, the control may be eliminated altogether. Any suitable blower may be used such as, for example, a blower snail equipped with a blower wheel rotated at a fixed speed of 2400 RPM by a motor producing 283,000 CCM at 0.08 sp. Standard commercial units have provided essentially Schlieren noise-free operation of variable wavelength HPLC detectors equipped with a 5 millimeter length by 0.25 millimeter diameter light path flow cell and the air chamber and other modifications described herein.

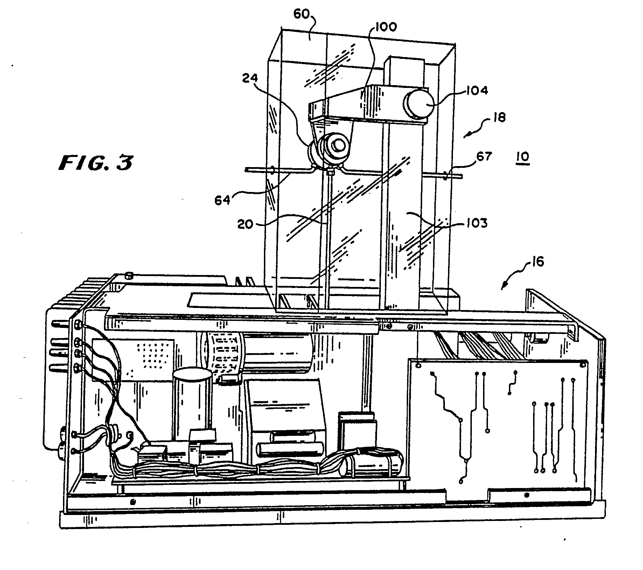

In Figure 3 there is shown a perspective view of the apparatus for reducing Schlieren noise 10 having the air flow control section 18 and the electro-optical section 16 showing the circuitry therein. As best shown in this view, the chromatographic column 20 is mounted to an adjustable arm 100 which may be positioned along a support column 103 which it grips at a fixed location upon tightening of the knob 104.

The arm 100 and support column 103 are enclosed within the air chamber 60 to support the column 20 therein at a fixed height which may be adapted in the preferred embodiment to either 10 centimeter or 25 centimeter columns. With this arrangement, the top of the columns and the sample injection valves may be mounted within the air chamber 60 and controlled by blowing air through the air duct 58 into the air chamber 60 until stability is reached and Schlieren noise reduced. The arm 100 and support column 103 are rigid and rigidly mounted to the frame of the housing. They are made of thermally conductive material to permit easy heat transfer and avoid the establishment of undesirable heat gradients.

From the above description, it can be understood that the apparatus and method for reducing Schlieren noise in a liquid chromatograph has several advantages, such as: (1) it is inexpensive; (2) it aids in providing temperature stability; (3) it is easy to control; (4) it stabilizes within a relatively short period of time; (5) it aids in the reduction in temperature-dependent retention time changes; (6) it greatly reduces Schlieren noise without degrading resolution; and (7) it actually improves chromatographic resolution.

Although in the preferred embodiment the air blows to the top of the air chamber 60 through a vertical air duct 58, it is only necessary for the air to be warmer as it moves along the column and cooler against the flow cell to equalize temperatures. Moreover, the column may be mounted in many different ways and at different elevations with respect to the cabinet.

**Claims**

1. Apparatus for reducing Schlieren noise in a liquid chromatograph comprising an absorbance detector (16) and a chromatographic column (20) and a flow cell (12) mounted within an optical enclosure (32) characterized by an air chamber (60) and an air duct (58) that communicates with said air chamber (60) at a first end; said air duct (58) and air chamber (60) having a second end adapted to be mounted to the absorbance detector (16); an adjustable arm (100) and support column (103) for supporting said chromatographic column (20) which is at least partly within the cabinet of the absorbance detector; means (56) for causing air to flow from said absorbance detector through said air duct (58), air chamber (60) and back to said absorbance detector being provided; the flow cell (12) and column (20) being mounted so that at least a portion of said column (20) is within said enclosure (32) and a portion of said flow cell (12) and chromatographic column (20) are within said absorbance detector, whereby air flows from said air duct (58) to said chamber (60) and through said chamber (60) against the chromatographic column (20) in the direction fluid flows through said chromatographic column (20) to said flow cell (12).

2. Apparatus for reducing the noise in a liquid chromatograph according to claim 1 further including an injection valve mounted to said chromatographic column characterized by both valve and column being within said air chamber (60).

3. Apparatus according to either claims 1 or 2 including a light generating apparatus; said light generating apparatus generating light with a wave length of between 180 nanometers and 3,000 nanometers and transmitting said light through said flow cell; characterized by said light generating system (14) generating light which varies in intensity by less than ten percent in one minute.

4. Apparatus according to any of claims 1—3 further characterized by an air flow control section (18) for measuring and adjusting the rate at which said air moves.

5. Apparatus according to claim 4 characterized in that said air flow control section (18) measures the temperature in said air chamber.

6. Apparatus according to any of claims 4—5 characterized in that said air flow control section (18) increases said rate automatically when said temperature drops with respect to temperature at a point outside the air chamber (60) and decreases said rate when said temperature increases with respect to temperature at a point outside the chamber (60).

7. Apparatus according to any of claims 1—6 characterized by substantially direct connection between said chromatographic column (20) and said flow cell (12) permitting direct communication therebetween.

8. Apparatus according to any of claims 1—7 characterized by an arm (100) and support column (103) for mounting said chromatographic column (20); said arm (100) and support column (103) for mounting said chromatographic column (20) being formed of a highly heat-conductive, heat-retaining metal.

9. A method of operating a liquid chromatograph having a least a chromatographic column, a sample injection valve, and a flow cell (12) comprising the steps of applying electrical power to an absorbance detector (16) within an enclosure containing at least the flow cell and a portion of the chromatographic column; characterized by causing air to flow from the enclosure (32) into an air chamber (60) that encloses a sample injection valve (24) and at least a part of a chromatographic column (20) and recirculating the air from a location near the sample injection valve (24) along the column (20) toward the flow cell (12) until temperature changes with respect to time at each location are within less than 0.1 degree Celsius within the enclosure and chamber within a one minute time period; passing eluant after the temperature has stabilized through the column (20) and flow cell (12); transmitting a beam of light having a wave length within a range of wave length of 180 nanometers. to 3,000 nanometers through the flow cell (12) from a source of light that varies less than ten percent in intensity in a one minute period; and detecting changes in the absorbance of light through said flow cell (12).

10. A method according to claim 9 causing air to flow from the enclosure (32) to the inlet of the chromatographic column and back to the enclosure (32) characterized by a rate of flow at start up in the range of 1 to 100 volumes of air per minute for each volume of capacity of the chamber (60).

11. A method of operating a liquid chromatograph according to claim 9 or 10 characterized by the steps of causing air to flow along a chromatographic column (20) from an electro-optical compartment (32) and back to the enclosure (32) in the same direction the eluant flows in the column (20); and after temperature has stabilized with respect to time in the enclosure, performing chromatographic runs.

12. A method according to any of claims 9—11 characterized in that the step of causing air to flow includes the step of causing air to flow from the enclosure (32) into an air chamber (60) having at least a part of a chromatographic column (20) within it and recirculating the air from a point on the column (20) spaced away from its end closer to the flow cell (12) into juxtaposition with the flow cell (12) until the temperature has stabilized within the air chamber (60); and transmitting eluant through the column (20) and flow cell (12) after the temperature has stabilized.

13. A method according to any of claims 9—12 further characterized in that the step of causing the air to flow includes the step of causing air to flow from the enclosure (32) into an air chamber (60) and recirculating the air until the temperature changes with respect to time at each location are within less than 0.1 degree Celsius per minute within the air chamber (60).

**Patentansprüche**

1. Vorrichtung zur Verringerung des Schlierenrauschens in einem Flüssigkeitschromatographen enthaltend einen Absorptionsdetektor (16) und eine Chromatographiesäule (20) und eine Strömungszelle (12), die in einer optischen Umhüllung (32) angeordnet ist, gekennzeichnet durch eine Luftkammer (60) und eine Luftleitung (58), die mit der Luftkammer (60) an einem ersten Ende in Verbindung steht, wobei die Luftleitung (58) und die Luftkammer (60) ein zweites Ende haben, das am Absorptionsdetektor (16) befestigbar ist; einen einstellbaren Arm (100) und eine Stützsäule (103) zur Halterung der Chromatographiesäule (20), die sich zumindest teilweise innerhalb des Gehäuses des Absorptionsdetektors befindet; Mittel (56), um Luft vom Absorptionsdetektor durch die Luftleitung (58), die Luftkammer (60) und zurück zum Absorptionsdetektor strömen zu lassen; Befestigung der Strömungszelle (12) und der Säule (20), so daß zumindest ein Teil der Säule (20) sich innerhalb der Umhüllung (32) und ein Teil der Strömungszelle (12) und der Chromatographiesäule (20) sich im Absorptionsdetektor befinden, wodurch die Luft von der Luftleitung (58) zur Kammer (60) und durch die Kammer (60) gegen die Chromatographiesäule (20) in der Richtung des Fluidstroms durch die Chromatographiesäule (20) zur Strömungszelle (12) strömt.

2. Vorrichtung zur Verringerung des Rauschens in einem Flüssigkeitschromatographen gemäß Anspruch 1, ferner aufweisend ein Einspritzventil, das an der Chromatographiesäule befestigt ist, dadurch gekennzeichnet, daß sowohl das Ventil als auch die Säule sich innerhalb der Luftkammer (60) befinden.

3. Vorrichtung nach Anspruch 1 oder 2 mit einer Lichterzeugungseinrichtung, die Licht mit einer Wellenlänge zwischen 180 Nanometer und 3000 Nanometer erzeugt und das Licht durch die Strömungszelle leitet, dadurch gekennzeichnet, daß das Lichterzeugungssystem (14) Licht erzeugt, dessen Intensität sich weniger als 10% innerhalb einer Minute ändert.

4. Vorrichtung nach einem der Ansprüche 1 bis 3, weiterhin gekennzeichnet durch einen Luftstromsteuerabschnitt (18) zum Messen und Einstellen der Bewegungsrate der Luft.

5. Vorrichtung nach Anspruch 4, dadurch gekennzeichnet, daß der Luftstromsteuerabschnitt (18) die Temperatur in der Luftkammer mißt.

6. Vorrichtung nach einem der Ansprüche 4 bis 5, dadurch gekennzeichnet, daß der Luftstromsteuerabschnitt (18) die Rate automatisch verringert, wenn die Temperatur bezüglich der Temperatur an einem Punkt außerhalb der Luftkammer (60) absinkt, und die Rate verringert, wenn die Temperatur sich bezüglich der Temperatur an einem Punkt außerhalb der Kammer (60) erhöht.

7. Vorrichtung nach einem der Ansprüche 1 bis 6, gekennzeichnet durch eine im wesentlichen direkte Verbindung zwischen der Chromatographiesäule (20) und der Strömungszelle (12), die eine direkte Übertragung zwischen diesen gestattet.

8. Vorrichtung nach einem der Ansprüche 1 bis 7, gekennzeichnet durch einen Arm (100) und eine Stützsäule (103) zur Befestigung der Chromatographiesäule (20), wobei der Arm (100) und die Stützsäule (103) zur Befestigung der Chromatographiesäule (20) aus stark wärmeleitfähigem, wärmespeicherndem Metall bestehen.

9. Verfahren zum Betrieb eines Flüssigkeitschromatographen, der mindestens eine Chromatographiesäule, ein Probeneinbringventil und eine Strömungszelle (12) aufweist, wobei einem Absorptionsdetektor (16) in einer Umhüllung, die zumindest die Strömungszelle und einen Teil der Chromatographiesäule enthält, elektrische Energie zugeführt wird, dadurch gekennzeichnet, daß man Luft von einer Umhüllung (32) in eine Luftkammer (60), die ein Probeneinbringventil (24) und mindestens einen Teil einer Chromatographiesäule (20) umgibt, strömen und die Luft von einer Stelle nahe dem Probeneinbringventil (24) entlang der Säule (20) zur Strömungszelle (12) rezirkulieren läßt, bis die zeitlichen Temperaturänderungen an jeder Stelle innerhalb der Umhüllung und der Kammer weniger als 0,1°C innerhalb einer 1 Minuten-Zeitspanne beträgt; man das Eluat, nachdem die Temperatur sich stabilisiert hat, durch die Säule (20) und die Strömungszelle (12) führt; einen Lichtstrahl mit einer Wellenlänge in einem Wellenlängenbereich von 180 Nanometer bis 3000 Nanometer von einer Lichtquelle, deren Intensität sich in einer Zeitspanne von 1 Minute weniger als 10% ändert, durch die Strömungszelle (12) sendet; und die Änderungen in der Absorption des Lichtes durch die Strömungszelle (12) feststellt.

10. Verfahren nach Anspruch 9, bei dem man Luft von der Umhüllung (32) zum Einlaß der Chromatographiesäule und zurück zur Umhüllung (32) strömen läßt, gekennzeichnet durch eine Strömungsrate beim Anlaufen im Bereich von 1 bis 100 Volumina Luft pro Minute für jedes Kapazitätsvolumen der Kammer (60).

11. Verfahren zum Betrieb eines Flüssigkeitschromatographen gemäß Anspruch 9 oder 10, gekennzeichnet durch die Schritte des Bewirkens des Strömens von Luft entlang einer Chromatographiesäule (20) von einem Elektrooptischen-Abteil (30) und zurück zur Umhüllung (32) in der gleichen Richtung wie das Eluat aus der Säule (30) fließt, und der Durchführung des Chromatographieablaufes nachdem die Temperatur sich bezüglich der Zeit in der Umhüllung stabilisiert hat.

12. Verfahren nach einem der Ansprüche 9 bis 11, dadurch gekennzeichnet, daß der Schritt der Erzeugens des Strömens von Luft den Schritt einschließt, Luft von der Umhüllung (32) in eine Luftkammer (60) strömen zu lassen, die zumindest einen Teil einer Chromatographiesäule (20) enthält, und die Luft von einer Stelle an der Säule (20) im Abstand von ihrem der Strömungszelle (12) näheren Ende in die Nähe der Strömungszelle (12) strömen zu lassen, bis sich die Temperatur innerhalb der Luftkammer (60) stabilisiert hat, und daß das Eluat durch die Säule (20) und die Strömungszelle (12) geleitet wird, nachdem die Temperatur sich stabilisiert hat.

13. Verfahren nach einem der Ansprüche 9 bis 12, ferner dadurch gekennzeichnet, daß der Schritt des Bewirkens des Strömens von Luft den Schritt einschließt, Luft von der Umhüllung (32) in eine Luftkammer (60) strömen und die Luft rezirkulieren zu lassen, bis die Temperaturänderungen bezüglich der Zeit an jeder Stelle innerhalb der Luftkammer (60) innerhalb von weniger als 0,1°C pro Minute liegen.

## Revendications

1. Dispositif pour réduire le bruit de stries dans un appareil de chromatographie liquide comprenant un détecteur d'absorbance (16) et une colonne chromatographique (20) et une cellule d'écoulement (12) montés à l'intérieur d'une enceinte optique (32), caractérisé par une chambre à air (60) et un conduit d'air (58) qui communique avec ladite chambre à air (60) à une première extrémité; ledit conduit d'air (58) et ladite chambre à air (60) présentant une second extrémité adaptée à être montée sur le détecteur d'absorbance (16); un bras réglable (100) et une colonne de support (103) pour supporter ladite colonne chromatographique (20) qui est au moins un partie à l'intérieur du compartiment du détecteur d'absorbance; un moyen (56) pour amener l'air à s'écouler du détecteur d'absorbance en passant par ledit conduit d'air (58), la chambre à air (60) et en retour vers ledit détecteur d'absorbance étant en outre prévu; la cellule d'écoulement (12) et la colonne (20) étant montées de manière qu'au moins une partie de ladite colonne (20) soit située à l'intérieur de ladite enceinte (32) et que ladite cellule d'écoulement (12) et ladite colonne chromatographique (20) soient situées à l'intérieur dudit détecteur d'absorbance, ce grâce à quoi l'air s'écoule dudit conduit d'air (58) vers ladite chambre (60) et par ladite chambre (60) contre la colonne chromatographique (20) dans la direction dans laquelle le flux de liquide s'écoule par la colonne chromatographique (20) vers ladite cellule d'écoulement (12).

2. Dispositif pour réduire le bruit dans un appareil de chromatographie liquide selon la revendication 1, comprenant en outre une valve d'injection montée sur ladite colonne chromatographique, caractérisé en ce que la valve et la colonne sont toutes les deux à l'intérieur de ladite chambre à air (60).

3. Dispositif selon l'une quelconque des revendications 1 ou 2, comprenant un dispositif générateur de lumière; ledit dispositif générateur de lumière engendrant de la lumière d'une longueur d'onde comprise entre 180 nanomètres et 3.000 nanomètres et transmettant ladite lumière par ladite cellule d'écoulement, caractérisé en ce que ledit système de génération de lumière 14 engendre de la lumière qui varie en intensité de moins de dix pour cent en une minute.

4. Dispositif selon l'une quelconque des revendications 1 à 3, caractérisé en outre par une section de commande d'écoulement d'air (18) pour mesurer et ajuster la vitesse à laquelle l'air se déplace.

5. Dispositif selon la revendication 4, caractérisé en ce que ladite section de commande d'écoulement d'air (18) mesure la température dans ladite chambre à air.

6. Dispositif selon l'une quelconque des revendications 4 ou 5, caractérisé en ce que ladite section de commande d'écoulement d'air (18) augmente automatiquement ladite vitesse quand la température baisse par rapport à la température en un point situé à l'extérieur à la chambre à air (60) et diminue ladite vitesse quand la température augmente par rapport à la température en un point situé à l'extérieur de la chambre (60).

7. Dispositif selon l'une quelconque des revendications 1 à 6, caractérisé par une connexion directe entre ladite colonne chromatographique (20) et ladite cellule d'écoulement (12) permettant une communication directe entre elles.

8. Dispositif selon l'une quelconque des revendications 1 à 7, caractérisé par un bras (100) et une colonne de support (103) pour supporter ladite colonne chromatographique (20); ledit bras (100) et ladite colonne de support (103) destinés à supporter ladite colonne chromatographique (20) étant réalisés en un métal présentant une caractéristique élevée de conduction de la chaleur et de rétention de la chaleur.

9. Procédé d'utilisation d'un nouvel appareil de chromatographie liquide comportant au moins une colonne chromatographique, une valve d'injection d'échantillon et une cellule d'écoulement (12), comprenant les opérations consistant à appliquer la puissance électrique à un détecteur d'absorbance (16) à l'intérieur d'une enceinte contenant au moins la cellule d'écoulement et une partie de la colonne chromatographique; caractérisé par le fait que l'on amène l'air à s'écouler de l'enceinte (32) dans la chambre à air (60) qui contient une valve d'injection d'échantillon (24) et au moins une partie d'une colonne chromatographique (20), et que l'on remet en circulation l'air à partir d'un emplacement situé près de la valve d'injection d'échantillon (24) le long de la colonne (20) en direction de la cellule d'écoulement (12) jusqu'à ce que les variations de la température par rapport au temps en chaque emplacement soient de moins de 0,1 degré Celsius à l'intérieur de l'enceinte et de la chambre dans les limites d'une période de temps d'une minute; que l'on fait passer l'éluant après que la température se soit stabilisée dans la colonne (20) et la cellule d'écoulement (12); que l'on transmet un faisceau de lumière ayant une longueur d'onde comprise dans la plage des longueurs d'onde de 180 nanomètres à 3.000 nanomètres par la cellule d'écoulement (12) à partir d'une source de lumière qui varie de moins de dix pour cent en intensité pendant une période d'une minute; et que l'on détecte des modifications de l'absorbance de la lumière par ladite cellule d'écoulement (12).

10. Procédé selon la revendication 9, amenant l'air à s'écouler de l'enceinte (32) vers l'entrée de la colonne chromatographique et en retour vers l'enceinte (32), caractérisé par une vitesse d'écoulement au démarrage située dans la plage de 1 à 100 volumes d'air par minute pour chaque volume de capacité de la chambre (60).

11. Procédé pour faire fonctionner un appareil chromatographique liquide selon la revendication 9 ou 10, caractérisé par les opérations consistant à amener l'air à circuler le long de la colonne chromatographique (20) à partir d'un compartiment électro-optique (32) et en retour vers l'enceinte (32) dans la même direction que celle dans laquelle l'éluant s'écoule dans la colonne (20); et après que la température se soit stabilisée par rapport au temps dans l'enceinte, à effectuer des passes chromatographiques.

12. Procédé selon l'une quelconque des revendications 9 à 11, caractérisé en ce que l'opération consistant à amener l'air à s'écouler comprend l'opération consistant à amener l'air à s'écouler de l'enceinte (32) dans une chambre à air (60) comprenant au moins une partie d'une colonne chromatographique (20) à l'intérieur et à remettre en circulation l'air à partir d'un point sur la colonne (20) qui est espacé de sont extrémité qui est la plus proche de la cellule d'écoulement (12) en juxtaposition avec la cellule d'écoulement (12) jusqu'à ce que la température se soit stabilisée dans la chambre à air (60); et à transmettre l'éluant par la colonne (20) et la cellule d'écoulement (12) après que la température se soite stabilisée.

13. Procédé selon l'une quelconque des revendications 9 à 12, caractérisé en outre en ce que l'opération consistant à amener l'air à s'écouler comprend l'opération consistant à amener l'air à s'écouler depuis l'enceinte (32) dans une chambre à air (60) et à remettre l'air en circulation jusqu'à ce que les variations de température par rapport au temps en chaque emplacement soient comprises dans les limites de moins de 0,1 degré Celsius par minute dans la chambre à air (60).

FIG. 1

FIG. 2

FIG. 3